# EUROPEAN PATENT SPECIFICATION

(11) **EP 2 647 668 B1**
(45) Date of publication and mention of the grant of the patent: **14.08.2019**
(21) Application number: 11845701.9
(22) Date of filing: 28.11.2011
(51) Int. Cl.: C08L 67/02, C08G 63/91, C08G 63/685, C08G 63/688

(54) **POLYESTER RESIN COMPOSITION AND MOLDED BODY OF SAME**
POLYESTERHARZZUSAMMENSETZUNG UND FORMKÖRPER DARAUS
COMPOSITION DE RÉSINE POLYESTER ET CORPS MOULÉ À BASE DE CELLE-CI

(30) Priority: 02.12.2010 JP 2010269789; 02.12.2010 JP 2010269790
(43) Date of publication of application: 09.10.2013
(73) Proprietor: Adeka Corporation, Tokyo 1160012 (JP)
(72) Inventor: SAKAI, Kanae, Saitama-shi Saitama 336-0022 (JP); KAWAMOTO, Naoshi, Saitama-shi Saitama 336-0022 (JP); URUSHIHARA, Tsuyoshi, Saitama-shi Saitama 336-0022 (JP)
(74) Representative: Gill Jennings & Every LLP
(86) International application number: PCT/JP2011/077422
(87) International publication number: WO 2012/073904

(56) References cited:
- EP-A1- 2 022 826
- EP-A1- 2 484 725
- JP-A- 2 187 451
- JP-A- 2 248 460
- JP-A- 3 273 050
- JP-A- 60 210 636
- JP-A- 2007 327 028
- US-A- 4 393 178

## Description

### TECHNICAL FIELD

The present invention relates to a polyester resin composition and a molded body thereof. More particularly, the present invention relates to a polyester resin composition in which physical properties are improved by an addition of an improved crystal nucleating agent; and a molded body thereof.

### BACKGROUND ART

As polyester resins obtained by polycondensation of a polycarboxylic acid and a polyhydric alcohol, for example, polyethylene terephthalate, polytrimethylene terephthalate, polybutylene terephthalate, polyethylene naphthalate and polybutylene terephthalate are known. Particularly, polyethylene terephthalate is a resin excellent in transparency, heat resistance, chemical resistance, hygienic properties, dyeing properties, economic efficiency and the like; therefore, it is widely used in, for example, fibers, film applications, beverage containers (PET bottles) of carbonated drinks, juice drinks, mineral waters and the like, containers of cosmetic and medical products, detergent and shampoo containers, electrophotographic toners and packaging materials such as food packages, pharmaceutical packages and wrapping materials.

However, despite being a crystalline resin, polyethylene terephthalate has an extremely slow crystallization rate; therefore, the range of applicable molding conditions is very narrow and an improvement in the processing cycle is thus difficult, so that the use of polyethylene terephthalate as a molding material is still limited. In addition, since a molded article obtained by molding polyethylene terephthalate has a low thermal deformation temperature, there is a problem that the serviceable temperature thereof is limited.

As a method of improving the crystallization rate, an addition of a crystal nucleating agent is known. As a crystal nucleating agent, compounds such as silicon nitride, sodium benzoate, aromatic metal phosphates and dibenzylidene sorbitol are known.

In Patent Document 1, sodium montanate, sodium stearate, calcium montanate and calcium stearate are proposed as crystallization promoters to be used in a polyester molding material for tableware which contains two kinds of resins (polyethylene terephthalate and polybutylene terephthalate) and an inorganic filler.

Further, in Patent Documents 2 and 3, metal salts of sulfonamide compounds are proposed as crystal nucleating agents of polyester resins.

Among thermoplastic polyester resins, in particular, polybutylene terephthalate exhibits excellent heat resistance, chemical resistance, dimensional stability and moldability and has properties of ultraviolet screening and the like, and it is easy to impart polybutylene terephthalate with flame retardancy. Therefore, polybutylene terephthalate is widely used as a general-purpose engineering plastic in the fields of, for example, electrical and electronic products and electric components of automobiles.

A crystal nucleating agent facilitates crystallization of a resin, thereby enabling a glossy molded article to be produced even when the die temperature is lowered during molding. For example, the transparency, rigidity and molding cycle of a resin can be improved. However, among thermoplastic polyester resins, polybutylene terephthalate is a resin for which it is difficult to attain an improvement in the physical properties by an addition of a crystal nucleating agent; therefore, development of novel crystal nucleating agent has been desired.

For example, in Patent Document 4, alkali metal salts of aliphatic or aromatic monocarboxylic acids, ionomer resins, talc, sodium bicarbonate and the like are proposed as crystal nucleating agents of polyalkylene terephthalates, and examples of the use of such crystal nucleating agents in polyethylene terephthalate are disclosed.

Further, in Patent Document 5, talc, calcium phosphate, metal oxides, sodium stearate and the like are proposed as nucleating agents of a flame-retardant polybutylene terephthalate composition.

In addition, in Patent Document 6, a molded article obtained by molding a polybutylene terephthalate resin composition comprising a polybutylene terephthalate resin, a polyethylene terephthalate resin, an inorganic filler and a crystal nucleating agent is proposed and, as the crystal nucleating agent, there are exemplified boron nitride, glass fibers, carbon fibers, glass beads, glass flakes, talc and mica.

Moreover, Patent Document 7 proposes to use, in a thermoplastic resin composition prepared by blending an inorganic crystal nucleating agent and a graft polymer of a polyalkylhydrogensiloxane and α-olefin with a polybutylene terephthalate resin having a melt index of 0.5 to 5 g/10 min (250°C, 325 g load, orifice diameter of 2 mm), magnesium silicate as the inorganic crystal nucleating agent.

Furthermore, in the Patent Document 1, as described in the above, sodium montanate and the like are proposed as crystallization promoters for two kinds of resins, polyethylene terephthalate and polybutylene terephthalate.

EP 2484725 A1 discloses a polyester resin composition comprising, with respect to 100 parts by mass of a polyester resin, 0.01 to 30 parts by mass of a phosphorus-based antioxidant (A) and 0.1 to 30 parts by mass of a sulfonamide compound metal salt (B), wherein the sulfonamide compound metal salt (B) has a water content of 0.1% to 20% based on the mass ratio with respect to the sulfonamide compound metal salt and not higher than 3% based on the mass ratio with respect to the polyester resin composition.

EP 2022826 A1 discloses a polyester resin composition including (a) a polyester resin containing (b) a sulfonamide compound metal salt which has a structure represented by the general formula (1).

US 4393178 A discloses fast crystallizing polyester compositions obtained by reacting a polyester which comprises aromatic or cycloaliphatic residues obtained from diacids and/or hydroxyacids and aliphatic, aromatic or cycloaliphatic residues of diols with an ionizable metal salt of an organic compound having at least one acidic proton using sufficient of the ionizable metal salt to result in at least 4% of the end groups of the polyester being converted to carboxylate end groups but insufficient to result in the melt degradation performance of the polyester determined as hereinafter described being substantially inferior to that of the polyester in the absence of the salt.

### RELATED ART DOCUMENTS

### PATENT DOCUMENTS

[Patent Document 1] Japanese Unexamined Patent Application Publication No. 2001-200148
[Patent Document 2] Japanese Unexamined Patent Application Publication No. 2007-327028
[Patent Document 3] WO 2008/038465
[Patent Document 4] Japanese Unexamined Patent Application Publication No. H05-214222
[Patent Document 5] Japanese Unexamined Patent Application Publication No. H07-133412
[Patent Document 6] Japanese Unexamined Patent Application Publication No. H08-183114
[Patent Document 7] Japanese Unexamined Patent Application Publication No. H09-188805

### SUMMARY OF THE INVENTION

### PROBLEMS TO BE SOLVED BY THE INVENTION

However, the physical property-improving effects attained by those conventionally known crystal nucleating agents that are disclosed in Patent Document 1 and the like are still not sufficient; therefore, development of novel crystal nucleating agent has been desired. Furthermore, when the metal salts of sulfonamide compounds described in Patent Documents 2 and 3 are added to a polyester resin to be molded, since the dispersion of the sulfonamide compounds in the resin is poor, there is a problem that the molded article obtained by molding the polyester resin becomes partially clouded.

Therefore, an object of the present invention is to provide a polyester resin composition which solves the above-described problems and exhibits improved physical properties; and a molded body thereof.

### MEANS FOR SOLVING THE PROBLEMS

In view of the above-described current circumstances, the present inventors intensively studied to discover that the above-described problems can be solved by using, as a crystal nucleating agent, a terminal-modified polyethylene terephthalate in which a group having a specific structure is introduced to a terminal or a terminal-modified polybutylene terephthalate in which a group having a specific structure is introduced to a terminal, thereby completing the present invention.

That is, the polyester resin composition according to the present invention is a polyester resin composition comprising (A) a polyester resin and (B1) a terminal-modified polyethylene terephthalate, wherein the above-described (B1) terminal-modified polyethylene terephthalate is a polyethylene terephthalate whose terminal(s) is/are modified with a group represented by the following Formula (1) and a metal carboxylate: 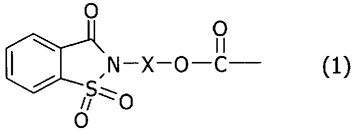 (wherein, X represents a direct bond or an alkylene group having 1 to 12 carbon atoms), wherein said metal carboxylate is selected from lithium carboxylate, potassium carboxylate and sodium carboxylate.

It is preferred that the content of the group represented by the above-described Formula (1) be 0.001 to 1 part by mass with respect to a total of 100 parts by mass of the above-described (A) polyester resin and (B1) terminal-modified polyethylene terephthalate, excluding the group represented by the above-described Formula (1).

The sheet according to the present invention is a sheet obtained by molding the above-described polyester resin composition, which is characterized by not being subjected to an annealing treatment.

Further, another polyester resin composition according to the present invention is a polyester resin composition comprising (A) a polyester resin and (B2) a terminal-modified polybutylene terephthalate, wherein the above-described (B2) terminal-modified polybutylene terephthalate is a polybutylene terephthalate whose terminal(s) is/are modified with a group represented by the following Formula (1) and a metal carboxylate: 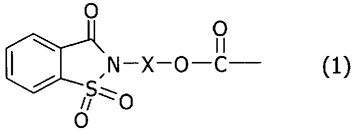 (wherein, X represents a direct bond or an alkylene group having 1 to 12 carbon atoms), wherein said metal carboxylate is selected from lithium carboxylate, potassium carboxylate and sodium carboxylate

It is preferred that the content of the group represented by the above-described Formula (1) be 0.001 to 5 parts by mass, with respect to a total of 100 parts by mass of the above-described (A) polyester resin and (B2) terminal-modified polybutylene terephthalate excluding the group represented by the above-described Formula (1).

In the polyester resin composition according to the present invention, it is preferred that the above-described (A) polyester resin be at least one polyester resin selected from the group consisting of polyethylene terephthalate, polybutylene terephthalate, polytrimethylene terephthalate, polyethylene naphthalate and polybutylene naphthalate.

Further, in the polyester resin composition according to the present invention, it is preferred that the above-described metal carboxylate be sodium carboxylate.

The molded body according to the present invention is obtained by molding the polyester resin composition according to the present invention.

### EFFECTS OF THE INVENTION

By the present invention, a polyester resin composition which exhibits improved physical properties and a molded body thereof can be provided.

### BRIEF DESCRIPTION OF THE DRAWINGS

Fig. 1 shows an X-ray photoelectron spectrum of a polyethylene terephthalate (PET) in which no nucleating agent is added.
Fig. 2 shows an X-ray photoelectron spectrum of a PET containing 1% sodium 1,2-benzisothiazol-3(2H)-one-1,1-dioxide.
Fig. 3 shows an X-ray photoelectron spectrum of a PET containing 3% sodium 1,2-benzisothiazol-3(2H)-one-1,1-dioxide.
Fig. 4 shows an X-ray photoelectron spectrum of a PET containing 5% sodium 1,2-benzisothiazol-3(2H)-one-1,1-dioxide.
Fig. 5 shows an X-ray photoelectron spectrum of sodium 1,2-benzisothiazol-3(2H)-one-1,1-dioxide.
Fig. 6 shows an X-ray photoelectron spectrum of N-ethylalcohol-1,2-benzisothiazol-3(2H)-one-1,1-dioxide.

### MODE FOR CARRYING OUT THE INVENTION

### [(A) Polyester Resin]

The (A) polyester resin used in the present invention is a polymer which is synthesized from a polycarboxylic acid monomer and a polyhydric alcohol component by linking these components via ester bond. Preferably, the (A) polyester resin contains an aromatic dicarboxylic acid or an alkyl ester thereof as a principal acid component and, as a principal glycol component, ethylene glycol when used with the (B1) terminal-modified polyethylene terephthalate or 1,4-butanediol when used with the (B2) terminal-modified polybutylene terephthalate. In the present invention, examples of the aromatic dicarboxylic acid or alkyl ester thereof include terephthalic acid, isophthalic acid, naphthalenedicarboxylic acid, diphenyldicarboxylic acid and alkyl esters thereof. The aromatic dicarboxylic acid or alkyl thereof may also be one which contains other aromatic dicarboxylic acid group, such as a halogenated product counterpart of those compounds exemplified in the above. Thereamong, terephthalic acid or dimethyl terephthalic acid is preferably employed, and the amount of thereof in the acid component is usually not less than 75 mol%, preferably not less than 80 mol%, most preferably not less than 90 mol%. These acid components may be used individually, or two or more thereof may be used in combination.

Further, as a copolymerizable component, in addition to the above-described compounds, an aliphatic dicarboxylic acid, such as adipic acid, sebacic acid, succinic acid or oxalic acid, or an alkyl ester thereof may be used. Moreover, a tri- or higher functional carboxylic acid such as trimellitic acid or an acid anhydride such as trimellitic anhydride may also be used in a small amount. Examples of the alkyl ester of an aromatic dicarboxylic acid mainly include methyl esters; however, ethyl esters, propyl esters, butyl esters and the like may be used individually, or two or more thereof may be used in combination. The alkyl ester of an aromatic dicarboxylic acid can be arbitrarily selected in accordance with the purpose thereof.

In the present invention, as a glycol component other than ethylene glycol and 1,4-butanediol, alkylene glycols such as propylene glycol, 1,6-hexanediol, neopentyl glycol, decamethylene glycol, cyclohexane dimethanol, poly(oxy)ethylene glycol, polytetramethylene glycol and polymethylene glycol may be used individually, or two or more thereof may be used in combination, and such glycol component can be arbitrarily selected in accordance with the purpose thereof. Further, a small amount of a polyhydric alcohol component such as glycerin may also be used and, alternatively, a small amount of an epoxy compound may be used as well.

The content of ethylene glycol in the glycol component is preferably not less than 75 mol%, more preferably not less than 80 mol%, particularly preferably not less than 90 mol%.

Examples of the above-described suitable polyester resins include aromatic polyesters such as polyalkylene terephthalates (e.g., polyethylene terephthalate, polybutylene terephthalate and polycyclohexanedimethylene terephthalate) and polyalkylene naphthalates (e.g., polyethylene naphthalate and polybutylene naphthalate).

The polyester resin according to the present invention may be a copolymer or a modification product of a plurality of polyester resins. Alternatively, the polyester resin according to the present invention may be a polymer alloy of the above-described suitable polyester resin and other resin described below. The term "polymer alloy" used herein refers to a polymeric multi-component system which may be a block copolymer obtained by copolymerization or a polymer blend obtained by mixing or the like of polymers.

As the above-described other resin, a wide range of polyester resins including polyether ester resins obtained by copolymerizing a polyester constituent with other acid component and/or a glycol component (for example, an acid component such as isophthalic acid, adipic acid, sebacic acid, glutaric acid, diphenylmethane dicarboxylic acid or dimer acid and/or a glycol component such as hexamethylene glycol, bisphenol A or neopentyl glycol alkylene oxide adduct); degradable aliphatic polyesters such as polyhydroxybutyrate, polycaprolactone, polybutene succinate, polyethylene succinate, polylactic acid resin, polymalic acid, polyglycolic acid, polydioxanone and poly(2-oxetanone); aromatic polyester/polyether block copolymers; aromatic polyester/polylactone block copolymers; and polyallylates may be used as well.

In the present invention, particularly, a resin which has a melting point of 200°C to 300°C and exhibits heat resistance is preferably used.

### [(B1) Terminal-modified Polyethylene Terephthalate]

The (B1) terminal-modified polyethylene terephthalate according to the present invention is a polyethylene terephthalate whose terminal(s) is/are modified with a group represented by the following Formula (1) and a metal carboxylate. Examples of the alkylene group having 1 to 12 carbon atoms which is represented by X in the following Formula (1) include methylene group, ethylene group, 1,3-propylene group, 1,4-butylene group, 1,5-pentylene group, 1,6-hexylene group, 1,2-butylene group, 1,2-pentylene group, 1,2-hexylene group, 1,9-nonylene group, 1,10-decylene group, 1,11-undecylene group and 1,12-dodecylene group, and the alkylene group is preferably an ethylene group. 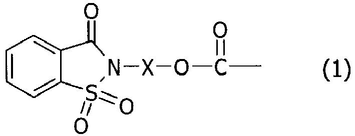 (wherein, X represents a direct bond or an alkylene group having 1 to 12 carbon atoms)

The average molecular weight of the (B1) terminal-modified polyethylene terephthalate is not particularly restricted and any arbitrary molecular weight may be selected. However, when the average molecular weight is less than 200, the retention of the polyethylene terephthalate in the polyester resin becomes poor, so that blooming may occur on the surface of the resulting molded article, while when it is greater than 20,000, the polyethylene terephthalate may not be able to exert an effect as a crystal nucleating agent; therefore, the average molecular weight of the (B1) terminal-modified polyethylene terephthalate is preferably 200 to 20,000, more preferably 500 to 10,000.

In the polyester resin composition according to the present invention, the content of the group represented by the above-described Formula (1) is preferably 0.001 to 5 parts by mass, more preferably 0.005 to 0.5 parts by mass, with respect to a total of 100 parts by mass of the (A) polyester resin and the (B1) terminal-modified polyethylene terephthalate excluding the group represented by the Formula (1).

### [(B2) Terminal-modified Polybutylene Terephthalate]

The (B2) terminal-modified polybutylene terephthalate according to the present invention is a polybutylene terephthalate whose terminal(s) is/are modified with a group represented by the following Formula (1) and a metal carboxylate. Examples of the alkylene group having 1 to 12 carbon atoms which is represented by X in the following Formula (1) include methylene group, ethylene group, 1,3-propylene group, 1,4-butylene group, 1,5-pentylene group, 1,6-hexylene group, 1,2-butylene group, 1,2-pentylene group, 1,2-hexylene group, 1,9-nonylene group, 1,10-decylene group, 1,11-undecylene group and 1,12-dodecylene group, and the alkylene group is preferably a 1,4-butylene group. 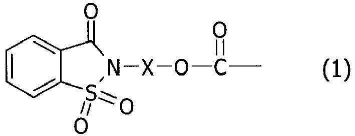 (wherein, X represents a direct bond or an alkylene group having 1 to 12 carbon atoms)

The average molecular weight of the (B2) terminal-modified polybutylene terephthalate is not particularly restricted and any arbitrary molecular weight may be selected. However, when it is less than 200, the retention of the polybutylene terephthalate in the polyester resin becomes poor, so that blooming may occur on the surface of the resulting molded article, while when it is greater than 20,000, the polybutylene terephthalate may not be able to exert an effect as a crystal nucleating agent; therefore, the average molecular weight of the (B2) terminal-modified polybutylene terephthalate is preferably 200 to 20,000, more preferably 500 to 10,000.

In the polyester resin composition according to the present invention, the content of the group represented by the above-described Formula (1) is preferably 0.001 to 5 parts by mass, more preferably 0.005 to 1 part by mass, with respect to a total of 100 parts by mass of the (A) polyester resin and the (B2) terminal-modified polybutylene terephthalate excluding the group represented by the Formula (1).

Examples of a method of modifying a terminal(s) of polyethylene terephthalate or polybutylene terephthalate with a group represented by the Formula (1), that is, a method of introducing the group, include a method in which a polymer of polyethylene terephthalate or polybutylene terephthalate whose terminal(s) is/are modified with a halogen or a halogenated alkylene group is allowed to react with a compound represented by the following Formula (2); a method in which a compound represented by the following Formula (3) is added as a polymerization monomer (stopper) at the time of polymerizing polyethylene terephthalate or polybutylene terephthalate; and a method in which a compound represented by the following Formula (2) or (3) is dissolved in a monomeric diol component and this diol component is added at the time of polymerizing polyethylene terephthalate or polybutylene terephthalate. 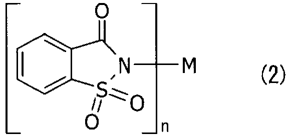 (wherein, n represents 1 or 2; M represents a hydrogen atom or a metal atom; when n is 1, M represents a hydrogen atom or an alkali metal; and, when n is 2, M represents a divalent metal atom) 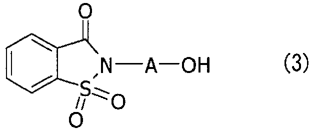 (wherein, A represents an alkylene group having 1 to 12 carbon atoms)

Examples of the alkylene group having 1 to 12 carbon atoms which is represented by A in the above-described Formula (2) include the same alkylene groups as those exemplified in the above, and the alkylene group is preferably an ethylene group for polyethylene terephthalate and a 1,4-butylene group for polybutylene terephthalate. The metal atom represented by M in the above-described Formula (2) may be, for example, a metal selected from lithium, potassium, sodium, magnesium, calcium, strontium, barium, titanium, manganese, iron, zinc, silicon, zirconium, yttrium and barium. The metal atom is preferably potassium, lithium or sodium since a crystal nucleating agent having excellent crystallization-promoting effect for the polyester resin can be obtained. The metal atom is particularly preferably sodium.

Further, in cases where a compound represented by the above-described Formula (2) or (3) is directly introduced to polyethylene terephthalate or polybutylene terephthalate, by polymerizing the polyethylene terephthalate or polybutylene terephthalate and then introducing the compound of the Formula (2) or (3) to the reaction system and continuing the polymerization, the compound can be chemical bound to the terminals of the polyethylene terephthalate or polybutylene terephthalate.

Further, examples of other method of modifying a terminal of polyethylene terephthalate or polybutylene terephthalate include a method in which a compound represented by the above-described Formula (2) or a compound represented by the above-described Formula (3) and a metal carboxylate are added and mixed after polymerization of polyethylene terephthalate or polybutylene terephthalate and the resultant is then heated to melt.

In cases where a compound represented by the above-described Formula (2) or (3) is used, the compound is preferably subjected to a pulverization treatment in advance. The pulverization treatment is performed by using a pulverizer until the volume-average particle size of the compound is reduced to the range of preferably 0.5 to 50 µm, more preferably 1 µm to 30 µm. Further, by this pulverization treatment, it is desired that the 250-µm mesh-pass be attained at not less than 90% by mass, more preferably not less than 95% by mass.

A volume-average particle size of smaller than 0.5 µm is not economical since a large amount of energy is required to achieve such level of pulverization, while in cases where the resulting pulverization product has a volume-average particle size of larger than 50 µm, when a terminal-modified polyethylene terephthalate or terminal modified polybutylene terephthalate prepared by using the pulverization product is blended and molded with a polyester resin, the compound represented by the above-described Formula (2) or (3) may not be dispersed and form aggregates in the polyethylene terephthalate or polybutylene terephthalate, deteriorating the outer appearance of the final molded article. Further, at the 250-µm mesh-pass of less than 90% by mass, when the compound is melt-kneaded with polyethylene terephthalate or polybutylene terephthalate, coarse particles may not be melted and remain in the resin to adversely affect the outer appearance and physical properties of the resulting molded article.

It is noted here that the term "volume-average particle size" used herein refers to a value at which the volume average, which is measured by a laser diffraction-scattering type particle size distribution analyzer (trade name: MICROTRAC MT3000II, manufactured by Nikkiso Co., Ltd.), becomes 50%.

As a pulverizer to be used in the above-described pulverization, any known pulverizer may be employed. For example, a roll-type pulverizer, a high-speed rotary impact pulverizer, an air blowing-type pulverizer or a shearing and grinding-type pulverization system or a medium-type pulverizer which utilizes a pulverization medium is preferably used. These pulverization systems may also be used in combination or may be connected with each other. Further, a system in which a classification mechanism is introduced may be employed as well.

Examples of the above-described roll-type pulverizer include roll rotary mills which perform pulverization between rotating rolls and roll tumbling mills whose rollers tumble on a table or inside a container.

Examples of the above-described high-speed rotary impact pulverizer include those in which a sample is collided against a rotor rotating at a high speed and pulverization is achieved by the impact force. Specific examples of such pulverizers include hammer mill-type pulverizers whose rotor is equipped with a fixed-type or swing-type impactor; pin mill-type rotary disk pulverizers whose rotating disk is equipped with a pin or an impactor head; axial flow-type pulverizers in which a sample is pulverized while being conveyed in the shaft direction; and annular-type pulverizers which pulverizes particles in a narrow annular section.

The above-described "air blowing-type pulverizer" (jet mill) refers to an apparatus which utilizes the kinetic energy of high-speed air flow to accelerate and collide a sample so as to achieve pulverization, and examples of such apparatus include those in which particles are pulverized by being directly collided against a collision board and those in which pulverization of particles are principally performed by frictions therebetween.

Examples of the above-described shearing and grinding-type pulverizer include grinding-type pulverizers which utilize the shear friction force under pressure.

Examples of the above-described medium-type pulverizer include container-driven mills in which the internal pulverization medium is driven by the movement (e.g., rotation or vibration) of a container; and medium stirring-type mills in which a medium is imparted with kinetic force by a stirring mechanism installed inside a container. Examples of the above-described container-driven mills include tumbling ball mills such as a ball mill, vibration mills, centrifugal mills, planetary mills and high-swing mills, and examples of the above-described medium stirring-type mills include those of, based on the container shape, tower-type, stirring bath-type, circulation tube-type and annular-type.

The above-described pulverization medium is a solid, and examples thereof include non-metal media of ceramics and the like (e.g., glass, agate, silicon nitride, zirconia and steatite); metal media such as alumina and titania; and alloy media such as tungsten carbide, chrome steel and stainless steel. The shape of the pulverization medium is not restricted and it may be in the form of, for example, beads or a ball.

In cases where a pulverization treatment is performed, it is desired that the compound represented by the Formula (2) or (3) be dried to a water content of preferably not higher than 8% by mass, more preferably not higher than 5% by mass, before being subjected to the pulverization treatment. When the water content is higher than 8% by mass, an extended pulverization time may reduce the pulverization efficiency and the pulverization products may adhere with each other to form lumps in the pulverization vessel or undergo secondary aggregation after the pulverization process. Meanwhile, it is uneconomical to dry the compound to a water content of less than 0.01% by mass.

It is noted here that the above-described water content was measured by using a heat drying-type moisture analyzer (MS-70, manufactured by A & D Co., Ltd.) in the standard mode (measurement accuracy: HI) at a sample plate temperature of 160°C. The amount of weight reduction in 10 g of a measurement sample was defined as the amount of water contained therein, and the ratio of this amount of water and the weight of the measurement sample was evaluated as water content.

Further, in cases where the compound represented by the Formula (2) or (3) is heat-melted with polyethylene terephthalate or polybutylene terephthalate, it is preferred that the compound represented by the Formula (2) or (3) be subjected to a pulverization treatment and then dried to a water content of less than 1% by mass. When a terminal-modified polyethylene terephthalate or terminal-modified polybutylene terephthalate prepared by using a compound having a water content of higher than 1% by mass is blended to a polyester resin and the resulting polyester resin is molded, air bubbles may be generated to deteriorate the outer appearance of the resulting molded article. Meanwhile, it is uneconomical to dry the compound to a water content of less than 0.01% by mass. As a drying method, a known dryer may be employed. Examples thereof include spray dryers, vacuum-freeze dryers, reduced-pressure dryers, moving-bed dryers, fluidized bed dryers, rotary dryers and stirring dryers, and a plurality of these dryers may be used in combination.

When the pulverization products form an aggregate with each other by weak inter-particle attractive force, it is preferred that the aggregate be subjected to a crushing treatment. As a crushing apparatus, a known crushing treatment apparatus may be employed, and examples thereof include jet mill and Henschel mill.

The above-described metal carboxylate is selected from lithium carboxylate, potassium carboxylate and sodium carboxylate, and sodium carboxylate is particularly preferred.

### [Other Additives]

In the polyester resin composition according to the present invention, other additive(s) may also be blended as required. Examples of a method for blending other additive include a method in which the additive is mixed with a polyester resin at an amount suitable for the purpose thereof and the resulting mixture is then melt-kneaded, granulated and molded using a molding machine such as an extruder. Other additive may also be mixed with the crystal nucleating agent of the present invention to be added, or other additive may be added after melt-kneading the polyester resin composition according to the present invention and the resultant may then be molded using a molding machine.

Examples of such other additive include plasticizers, fillers, phenolic antioxidants, phosphorus-based antioxidants, thioether-based antioxidants, ultraviolet absorbers, hindered amine compounds, heavy metal inactivators, crystal nucleating agents other than the one used in the present invention, flame retardants, metallic soaps, hydrotalcites, fillers, lubricants, antistatic agents, pigments and dyes.

It is preferred that the polyester resin contain a plasticizer, particularly at least one polyether ester-based plasticizer and/or benzoate-based plasticizer, in an amount of 0.1 to 20 parts by mass since the moldability of the polyester resin as well as the shrinkage anisotropy, surface properties and the like of the resulting molded article can be improved.

Examples of the above-described plasticizer include polyethylene glycol butyrate, polyethylene glycol isobutyrate, polyethylene glycol di(2-ethylbutyric acid)ester, polyethylene glycol (2-ethylhexylic acid)ester, polyethylene glycol decanoate, dibutoxyethanol adipate, di(butyldiglycol)adipate, di(butylpolyglycol)adipate, di(2-ethylhexyloxyethanol)adipate, di(2-ethylhexyldiglycol)adipate, di(2-ethylhexylpolyglycol)adipate, dioctoxyethanol adipate, di(octyldiglycol)adipate, di(octylpolyglycol)adipate, ethylene glycol benzoate, diethylene glycol dibenzoate, polyethylene glycol dibenzoate, propylene glycol dibenzoate, dipropylene glycol dibenzoate, tripropylene glycol dibenzoate, 1,3-butanediol dibenzoate, 1,4-butanediol dibenzoate, 1,6-hexanediol dibenzoate, 3-methyl-1,5-pentanediol dibenzoate, 1,8-octanediol dibenzoate, EP-400 (trade name; manufactured by Sanyo Chemical Industries, Ltd.) and polyester-based plasticizers in which both terminals of the basic structure, which is a condensate of a polybasic acid and a polyhydric alcohol, are terminated by a monohydric alcohol or a monobasic acid.

As the above-described polybasic acid, any polybasic acid known as a monomer for polyester can be used. Examples thereof include aromatic carboxylic acids such as terephthalic acid, isophthalic acid, trimellitic acid, pyromellitic acid and naphthalenedicarboxylic acid; aliphatic carboxylic acids such as maleic acid, fumaric acid, succinic acid, alkenyl succinic acid and adipic acid; methyl ester compounds of these polybasic acids; and anhydrides thereof. These polybasic acids may be used individually, or two or more thereof may be used in combination.

As the above-described polyhydric alcohol, any polyhydric alcohol known as a monomer for polyester can be used, and examples thereof include aliphatic polyhydric alcohols having 2 to 18 carbon atoms, such as ethylene glycol, 1,2-propylene glycol, 1,3-propylene glycol, 2-methyl-1,3-propanediol, 1,4-butanediol, 1,5-pentanediol, 2,2-dimethyl-1,3-propanediol(neopentylglycol), 2,2-diethyl-1,3-propanediol(3,3-dimethylolpentane), 2-n-butyl-2-ethyl-1,3-propanediol, (3,3-dimethylolheptane), 3-methyl-1,5-pentanediol-1,6-hexanediol, 2,2,4-trimethyl-1,3-pentanediol, 2-ethyl-1,3-hexanediol, 2-methyl-1,8-octanediol, 1,9-nonanediol, 1,10-decanediol, 1,12-octadecanediol and glycerin; alicyclic polyhydric alcohols such as cyclohexanediol, cyclohexane dimethanol and hydrogenated bisphenol A; and aromatic diols such as ethylene oxide adduct of bisphenol A and propylene oxide adduct of bisphenol A. These polyhydric alcohols may be used individually, or two or more thereof may be used in combination.

Specific examples of the above-described monohydric alcohol include aliphatic alcohols having 8 to 18 carbon atoms, such as octanol, isooctanol, 2-ethylhexanol, nonanol, isononanol, 2-methyloctanol, decanol, isodecanol, undecanol, dodecanol, tridecanol, tetradecanol, hexadecanol and octadecanol; alicyclic alcohols such as cyclohexanol; and aromatic alcohols such as benzyl alcohol, 2-phenylethanol, 1-phenylethanol, 2-phenoxyethanol, 3-phenyl-1-propanol and 2-hydroxyethyl benzyl ether. These monohydric alcohols may be used individually, or two or more thereof may be used in combination.

Specific examples of the above-described monobasic acid include monocarboxylic acids such as caprylic acid, nonanoic acid, capric acid, undecylic acid and laurylic acid; monoesters of dicarboxylic acids; and diesters of tricarboxylic acids. These monobasic acids may be used individually, or two or more thereof may be used in combination.

Examples of plasticizers other than those described in the above include alicyclic ester-based plasticizers, and example thereof include cyclohexane dicarboxylates, cyclohexane dicarboxylates having an epoxy group, and cyclohexane carboxylic anhydrides such as 1,2-cyclohexane dicarboxylic anhydride.

Examples of still other plasticizers include phthalate-based plasticizers such as ethylbenzyl phthalate, butylbenzyl phthalate, isobutylbenzyl phthalate, heptylbenzyl phthalate, (2-ethylhexyl)benzyl phthalate, n-octylbenzyl phthalate, nonylbenzyl phthalate, isononylbenzyl phthalate, isodecylbenzyl phthalate, undecylbenzyl phthalate, tridecylbenzyl phthalate, cyclohexylbenzyl phthalate, benzyl-3-(isobutyryloxy)-1-isopropyl-2,2-dimethylpropyl phthalate, myristylbenzyl phthalate, dibutyl phthalate, isobutyl phthalate, diheptyl phthalate, di-(2-ethylhexyl) phthalate, di-n-octyl phthalate, dinonyl phthalate, diisononyl phthalate, diisodecyl phthalate, diundecyl phthalate, ditridecyl phthalate, dicyclohexyl phthalate and diphenyl phthalate; isophthalates such as di-(2-ethylhexyl)isophthalate and diisooctyl isophthalate; tetrahydrophthalates such as di-2-ethylhexyl tetrahydrophthalate; adipates such as di-(2-ethylhexyl)adipate, dibutoxyethyl adipate and diisononyl adipate; azelates such as di-n-hexyl azelate and di-(2-ethylhexyl)azelate; sebacates such as di-n-butyl sebacate; maleates such as di-n-butyl maleate and di-(2-ethylhexyl)maleate; fumarates such as di-n-butyl fumarate and di-(2-ethylhexyl)fumarate; trimellitates such as tri-(2-ethylhexyl)trimellitate, tri-n-octyl trimellitate and triisooctyl trimellitate; pyromellitates such as tetra-(2-ethylhexyl)pyromellitate and tetra-n-octyl pyromellitate; citrates such as tri-n-butyl citrate and acetyltributyl citrate; itaconates such as dimethyl itaconate, diethyl itaconate, dibutyl itaconate and di-(2-ethylhexyl)itaconate; ricinoleic acid derivatives such as glyceryl monoricinoleate and diethylene glycol monoricinoleate; stearates such as glycerin monostearate and diethylene glycol distearate; other fatty acid esters such as diethylene glycol dipelargonate and pentaerythritol fatty acid esters; and phosphates such as tributoxyethyl phosphate, triphenyl phosphate, tricresyl phosphate, diphenyldecyl phosphate and diphenyloctyl phosphate. These other plasticizers may be used individually, or two or more thereof may be used in combination.

The above-described plasticizer(s) is/are blended in an amount of preferably 0.1 to 20 parts by mass, more preferably 0.5 to 15 parts by mass, still more preferably 1 to 10 parts by mass, most preferably 1 to 5 parts by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1). When the amount is less than 0.1 parts by mass, the effect of the plasticizer may not be exerted sufficiently, while when the amount is greater than 20 parts by mass, the plasticizer may bleed out.

In the present invention, an inorganic filler may also be used. By the use of an inorganic filler, the resulting molded article can be imparted with rigidity such as mechanical strength and a molded article showing limited anisotropy and warping can be obtained. In addition, the fluidity of the polyester resin composition can be controlled at the time of melt processing. Such an inorganic filler may be appropriately selected in accordance with the purpose thereof from those which are conventionally used to reinforce a thermoplastic resin.

Examples of the above-described inorganic filler include talc, mica, calcium carbonate, calcium oxide, calcium hydroxide, magnesium carbonate, magnesium hydroxide, magnesium oxide, magnesium sulfate, aluminum hydroxide, barium sulfate, glass powder, glass fiber, clay, dolomite, mica, silica, alumina, potassium titanate whiskers, wollastonite and fibrous magnesium oxysulfate. It is preferred that the inorganic filler have an average particle size (in the case of a spherical or flat filler) or an average fiber diameter (in the case of a needle-form or fibrous filler) of not greater than 5 µm.

For the purpose of imparting the resulting molded article with rigidity such as mechanical strength, a fibrous inorganic filler is preferably used and a glass fiber is particularly preferably used. Further, in order to obtain a molded article showing limited anisotropy and warping, a plate-form inorganic filler is preferably used and, for example, mica or glass flake is particularly preferably used. Moreover, a particulate inorganic filler is preferably used to adjust the fluidity of the polyester resin composition during the production of a molded article.

The above-described inorganic filler is blended in an amount of 0.01 to 400 parts by mass with respect to a total of 100 parts by mass of the above-described (A) polyester resin and the (B1) terminal-modified polyethylene terephthalate or the (B2) terminal-modified polybutylene terephthalate, excluding the group represented by the Formula (1). From the standpoints of the mechanical strength, rigidity, shrinkage anisotropy and surface properties of the resulting molded article, the inorganic filler is blended in an amount of preferably 1 to 300 parts by mass, more preferably 5 to 200 parts by mass, still more preferably 10 to 50 parts by mass. When the amount is less than 0.01 parts by mass, the mechanical strength and the rigidity of the resulting molded article may not be improved, while when the amount is greater than 400 parts by mass, the outer appearance of the resulting molded article may be deteriorated due to surface roughness or the like.

The above-described inorganic filler may also be treated in advance with a surface treatment agent in order to improve its affinity and adhesion with the polyester resin. As the surface treatment agent, for example, an aminosilane compound or a surface treatment agent containing at least epoxy resin is preferably used.

Examples of the above-described aminosilane compound include γ-aminopropyl triethoxysilane, γ-aminopropyl trimethoxysilane and γ-(2-aminoethyl)aminopropyl trimethoxysilane.

The epoxy resins contained in the above-described surface treatment agent are generally classified into novolac-type epoxy resins and bisphenol-type epoxy resins, and a novolac-type epoxy resin is preferably used. Examples of the novolac-type epoxy resin include polyfunctional epoxy resins such as phenol novolac-type epoxy resins and cresol novolac-type epoxy resins.

In the surface treatment agent, in addition to the above-described aminosilane compound and epoxy resin, a component such as urethane resin, acryl resin, antistatic agent, lubricant and/or water repellent may also be blended in such an amount which does not adversely affect the properties of the surface treatment agent. Further, examples of other surface treatment agent include non-novolac-type and non-bisphenol-type epoxy resins and coupling agents.

Examples of the above-described phenolic antioxidant include 2,6-di-t-butyl-4-ethylphenol, 2-t-butyl-4,6-dimethylphenol, styrenated phenol, 2,2'-methylenebis(4-ethyl-6-t-butylphenol), 2,2'-thiobis-(6-t-butyl-4-methylphenol), 2,2'-thiodiethylenebis[3-(3,5-di-t-butyl-4-hydroxyphenyl)propionate], 2-methyl-4,6-bis(octylsulfanylmethyl)phenol, 2,2'-isobutylidenebis(4,6-dimethylphenol), isooctyl-3-(3,5-di-t-butyl-4-hydroxyphenyl)propionate, N,N'-hexane-1,6-diylbis[3-(3,5-di-t-butyl-4-hydroxyphenyl)propionamide, 2,2'-oxamide-bis[ethyl-3-(3,5-di-t-butyl-4-hydroxyphenyl)propionate], 2-ethylhexyl-3-(3',5'-di-t-butyl-4'-hydroxyphenyl)propionate, 2,2'-ethylenebis(4,6-di-t-butylphenol), 3,5-bis(1,1-dimethylethyl)-4-hydroxy-benzenepropanoate, C13-15 alkyl esters, 2,5-di-t-amylhydroquinone, hindered phenol polymer (AO.OH998, manufactured by ADEKA Palmarole), 2,2'-methylenebis[6-(1-methylcyclohexyl)-p-cresol], 2-t-butyl-6-(3-t-butyl-2-hydroxy-5-methylbenzyl)-4-methylphenyl acrylate, 2-[1-(2-hydroxy-3,5-di-t-pentylphenyl)ethyl]-4,6-di-t-pentylphenyl acrylate, 6-[3-(3-t-butyl-4-hydroxy-5 -methyl)propoxy] -2,4,8,10-tetra-t-butylbenzo [d,f][1,3,2]-dioxaphosphepin, hexamethylenebis[3-(3,5-di-t-butyl-4-hydroxyphenyl)propionate, calcium bis[monoethyl(3,5-di-t-butyl-4-hydroxybenzyl)phosphonate, a reaction product between 5,7-bis(1,1-dimethylethyl)-3-hydroxy-2(3H)-benzofuranone and o-xylene, 2,6-di-t-butyl-4-(4,6-bis(octylthio)-1,3,5-triazine-2-ylamino)phenol, DL-a-tocophenol (vitamin E), 2,6-bis(α-methylbenzyl)-4-methylphenol, bis[3,3-bis-(4'-hydroxy-3'-t-butyl-phenyl)butyric acid]glycol ester, 2,6-di-t-butyl-p-cresol, 2,6-diphenyl-4-octadecyloxyphenol, stearyl(3,5-di-t-butyl-4-hydroxyphenyl)propionate, distearyl(3,5-di-t-butyl-4-hydroxybenzyl)phosphonate, tridecyl-3,5-di-t-butyl-4-hydroxybenzyl thioacetate, thiodiethylenebis[(3,5-di-t-butyl-4-hydroxyphenyl)propionate], 4,4'-thiobis(6-t-butyl-m-cresol), 2-octylthio-4,6-di(3,5-di-t-butyl-4-hydroxyphenoxy)-s-triazine, 2,2'-methylenebis(4-methyl-6-t-butylphenol), bis[3,3-bis(4-hydroxy-3-t-butylphenyl)butyric acid]glycol ester, 4,4'-butylidenebis(2,6-di-t-butylphenol), 4,4'-butylidenebis(6-t-butyl-3-methylphenol), 2,2'-ethylidenebis(4,6-di-t-butylphenol), 1,1,3-tris(2-methyl-4-hydroxy-5-t-butylphenyl)butane, bis[2-t-butyl-4-methyl-6-(2-hydroxy-3-t-butyl-5-methylbenzyl)phenyl]terephthalate, 1,3,5-tris(2,6-dimethyl-3-hydroxy-4-t-butylbenzyl)isocyanurate, 1,3,5-tris(3,5-di-t-butyl-4-hydroxybenzyl)isocyanurate, 1,3,5-tris(3,5-di-t-butyl-4-hydroxybenzyl)-2,4,6-trimethylbenzene, 1,3,5-tris[(3,5-dit-butyl-4-hydroxyphenyl)propionyloxyethyl]isocyanurate, tetrakis[methylene-3-(3',5'-di-t-butyl-4'-hydroxyphenyl)propionate]methane, 2-t-butyl-4-methyl-6-(2-acryloyloxy-3-t-butyl-5-methylbenzyl)phenol, 3,9-bis[2-(3-t-butyl-4-hydroxy-5-methylhydrocinnamoyloxy)-1,1-dimethylethyl]-2,4,8,10-tetraoxaspiro[5.5]undecane and triethylene glycol-bis[β-(3-t-butyl-4-hydroxy-5-methylphenyl)propionate].

The above-described phenolic antioxidant is used in an amount of 0.001 to 10 parts by mass, more preferably 0.01 to 5 parts by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1).

Examples of the above-described phosphorus-based antioxidant include triphenyl phosphite, diisooctyl phosphite, heptakis triphosphite, triisodecyl phosphite, diphenyl isooctyl phosphite, diisooctyl octylphenyl phosphite, diphenyl tridecyl phosphite, triisooctyl phosphite, trilauryl phosphite, diphenyl phosphite, tris(dipropylene glycol)phosphite, diisodecyl pentaerythritol diphosphite, dioleyl hydrogen phosphite, trilauryl trithiophosphite, bis(tridecyl)phosphite, tris(isodecyl)phosphite, tris(tridecyl)phosphite, diphenyldecyl phosphite, dinonylphenyl-bis(nonylphenyl)phosphite, poly(dipropylene glycol)phenyl phosphite, tetraphenyl dipropyl glycol diphosphite, trisnonylphenyl phosphite, tris(2,4-di-t-butylphenyl)phosphite, tris(2,4-di-t-butyl-5-methylphenyl)phosphite, tris[2-t-butyl-4-(3 -t-butyl-4-hydroxy-5 -methylphenylthio)-5 -methylphenyl]phosphite, tridecyl phosphite, octyldiphenyl phosphite, di(decyl)monophenyl phosphite, distearyl pentaerythritol diphosphite, a mixture of distearyl pentaerythritol and calcium stearate, alkyl(C10) bisphenol A phosphite, di(tridecyl)pentaerythritol diphosphite, di(nonylphenyl)pentaerythritol diphosphite, bis(2,4-di-t-butylphenyl)pentaerythritol diphosphite, bis(2,6-di-t-butyl-4-methylphenyl)pentaerythritol diphosphite, bis(2,4,6-tri-t-butylphenyl)pentaerythritol diphosphite, bis(2,4-dicumylphenyl)pentaerythritol diphosphite, tetraphenyl-tetra(tridecyl)pentaerythritol tetraphosphite, bis(2,4-di-t-butyl-6-methylphenyl)ethyl phosphite, tetra(tridecyl)isopropylidene diphenol diphosphite, tetra(tridecyl)-4,4'-n-butylidenebis(2-t-butyl-5-methylphenol)diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, 9,10-dihydro-9-oxa-10-phosphaphenanthrene-10-oxide, (1-methyl-1-propanyl-3-ylidene)-tris(2-1,1-dimethylethyl)-5-methyl-4,1-phenylene)hexatridecyl phosphite, 2,2'-methylenebis(4,6-t-butylphenyl)-2-ethylhexyl phosphite, 2,2'-methylenebis(4,6-di-t-butylphenyl)-octadecyl phosphite, 2,2'-ethylidenebis(4,6-di-t-butylphenyl) fluorophosphite, 4,4'-butylidenebis(3-methyl-6-t-butylphenylditridecyl)phosphite, tris(2-[(2,4,8,10-tetrakis-t-butyldibenzo[d,f][1,3,2]dioxaphosphepin-6-yl)oxy]ethyl)amine, 3,9-bis(4-nonylphenoxy)-2,4,8,10-tetraoxa-3,9-diphosphaspiro[5,5]undecane, 2,4,6-tri-t-butylphenyl-2-butyl-2-ethyl-1,3-propanediol phosphite, poly-4,4'-isopropylidene diphenol C12-15 alcohol phosphite and phosphites of 2-ethyl-2-butylpropylene glycol and 2,4,6-tri-t-butylphenol; however, a phosphorus-based antioxidant represented by the following Formula (4) is preferred since it exhibits outstanding coloration-preventing effect at the time of molding: 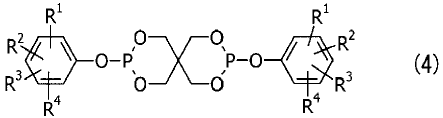 (wherein, R¹, R², R³ and R⁴ each independently represent a hydrogen atom, an alkyl group having 1 to 8 carbon atoms which is optionally branched, an aryl group having 6 to 12 carbon atoms which is optionally substituted or an aralkyl group having 7 to 12 carbon atoms).

The above-described phosphorus-based antioxidant is used in an amount of 0.001 to 10 parts by mass, more preferably 0.01 to 5 parts by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1). When the amount is 0.001 parts by mass or less, the polyester resin composition may not be able to attain sufficient stabilizing effect, while when the amount is greater than 10 parts by mass, dispersion of the antioxidant in the resin may be reduced, which adversely affect the outer appearance of the resulting molded article.

Examples of the alkyl group having 1 to 8 carbon atoms which is represented by R¹, R², R³ and R⁴ in the above-described Formula (4) include methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, n-octyl, isooctyl, tert-octyl, 2-ethylhexyl and trifluoromethyl. In these groups, the hydrogen atoms are optionally substituted by a halogen atom, a saturated aliphatic ring, an aromatic ring or the like. Further, examples of the above-described aryl group having 6 to 12 carbon atoms which is optionally substituted include phenyl group and naphthyl group, and examples of the aralkyl group having 6 to 12 carbon atoms include those in which a hydrogen atom of the above-described alkyl group is substituted by an aryl group.

Examples of the above-described thioether-based antioxidant include tetrakis[methylene-3-(laurylthio)propionate]methane, bis(methyl-4-[3-n-alkyl(C12/C14)thiopropionyloxy] 5 -t-butylphenyl)sulfide, ditridecyl-3,3'-thiodipropionate, dilauryl-3,3'-thiodipropionate, dimyristyl-3,3'-thiodipropionate, distearyl-3,3'-thiodipropionate, lauryl/stearyl thiodipropionate, 4,4'-thiobis(6-t-butyl-m-cresol), 2,2'-thiobis(6-t-butyl-p-cresol) and distearyl-disulfide.

The thioether-based antioxidant is preferably used in an amount of 0.01 to 0.3 parts by mass with respect to a total of 100 parts by mass of the above-described (A) polyester resin and the (B1) terminal-modified polyethylene terephthalate or the (B2) terminal-modified polybutylene terephthalate, excluding the group represented by the Formula (1).

Examples of the above-described ultraviolet absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazolylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5 -tert-butylphenyl]benzotriazole, 2- [2-hydroxy-3 -(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2- [2-hydroxy-3 -tert-butyl-5 -(2-methacryloyloxyethyl)phenyl]benzotriazole, 2- [2-hydroxy-3 -tert-amyl-5 -(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2- [2-hydroxy-4-(3 -methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C12 to 13 mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenyl acrylate and methyl-2-cyano-3-methyl-3-(p-methoxyphenyl)acrylate; and a variety of metal salts and metal chelates, particularly salts and chelates of nickel and chromium.

The above-described ultraviolet absorber is used in an amount of 0.001 to 5 parts by mass, more preferably 0.005 to 0.5 parts by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1).

Examples of the above-described hindered amine compound light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3 ,4-butane tetracarboxylate, bis(2,2,6,6-tetramethyl-4-piperidyl)-di(tridecyl)-1,2,3,4-butane tetracarboxylate, bis(1,2,2,6,6-pentamethyl-4-piperidyl)-di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8-12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis{4-(1-octyloxy-2,2,6,6-tetramethyl)piperidyl} decanedionate, bis {4-(2,2,6,6-tetramethyl-1-undecyloxy)piperidyl}carbonate and TINUVIN NOR 371 (trade name, manufactured by Ciba Specialty Chemicals K.K.).

The above-described hindered amine-based light stabilizer is used in an amount of 0.001 to 5 parts by mass, more preferably 0.005 to 0.5 parts by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1).

Examples of the above-described other crystal nucleating agent include simple substances such as carbon blacks, graphites, zinc powder and aluminum powder; metal oxides such as zinc oxide, magnesium oxide, alumina, hematite and magnetite; clays and minerals, such as talc, asbestos, kaolin, montmorillonite, clay and pyrophyllite; sulfates such as calcium sulfate and barium sulfate; inorganic phosphates such as calcium phosphate; organic phosphates such as metal salts of aromatic oxysulfonic acids, magnesium salts of organophosphorus compounds and zinc salts of organophosphorus compounds; inorganic silicates such as calcium silicate and magnesium silicate; metal carboxylates such as sodium monocarboxylate, lithium monocarboxylate, barium monocarboxylate, magnesium monocarboxylate, calcium monocarboxylate, sodium stearate, sodium montanate, calcium montanate, sodium benzoate, potassium benzoate, calcium benzoate, aluminum 4-tert-butyl benzoate, sodium adipate, disodium bicyclo[2.2.1]heptane-2,3-dicarboxylate, sodium carbonate and magnesium carbonate; metal phosphates such as sodium bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyhydric alcohol derivatives such as dibenzylidene sorbitol, bis(methylbenzylidene)sorbitol, bis(p-ethylbenzylidene)sorbitol and bis(dimethylbenzylidene)sorbitol; amide compounds such as N,N',N"-tris[2-methylcyclohexyl]-1,2,3-propane tricarboxyamide, N,N',N"-tricyclohexyl-1,3,5-benzene tricarboxyamide, N,N'-dicyclohexyl-naphthalene dicarboxyamide and 1,3,5-tri(2,2-dimethylpropionylamino)benzene; and polymeric substances such as polycaprolactones, polyglycols, polyolefins, nylon 6, polytetrafluoroethylene powder, high-melting-point polyester resins, polyester oligomers and alkali metal salts thereof.

The above-described other crystal nucleating agent is used in such an amount that the total amount of the crystal nucleating agents that are used in the present invention becomes 0.001 to 1 part by mass with respect to a total of 100 parts by mass of the above-described (A) polyester resin and the (B1) terminal-modified polyethylene terephthalate or the (B2) terminal-modified polybutylene terephthalate, excluding the group represented by the Formula (1).

Examples of the above-described flame retardant include aromatic phosphates such as triphenyl phosphate, tricresyl phosphate, trixylenyl phosphate, cresyldiphenyl phosphate, cresyl-2,6-xylenyl phosphate and resorcinol bis(diphenylphosphate); phosphonate such as divinyl phenylphosphonate, diallyl phenylphosphonate and (1-butenyl)phenylphosphonate; phosphinates such as phenyl diphenylphosphinate, methyl diphenylphosphinate and 9,10-dihydro-9-oxa-10-phosphaphenanthlene-10-oxide derivatives; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol A-type epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol A-type dimethacrylate, pentabromobenzyl acrylate and brominated styrene.

The above-described flame retardant is used in an amount of 1 to 70 parts by mass, more preferably 10 to 30 parts by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1).

The above-described lubricant is added for the purpose of imparting the surface of the resulting molded body with lubricity and improving the damage-preventing effect.

Examples of such lubricant include unsaturated fatty acid amides such as oleic acid amide and erucic acid amide; and saturated fatty acid amides such as behenic acid amide and stearic acid amide. These lubricants may be used individually, or two or more thereof may be used in combination.

The above-described lubricant is added in an amount of 0.03 to 2 parts by mass, more preferably 0.04 to 1 part by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1). When the amount is less than 0.03 parts by mass, the desired lubricity may not be attained, while when the amount is greater than 2 parts by mass, the lubricant component may bleed out to the surface and/or cause deterioration in the physical properties the resulting molded article.

The above-described antistatic agent is added for the purpose of reducing the electrostatic property of the resulting molded body and preventing adhesion of dusts caused by electrostatic charge. Examples of the antistatic agent include cationic antistatic agents, anionic antistatic agents and non-ionic antistatic agents. Preferred examples thereof include polyoxyethylene alkylamines, polyoxyethylene alkyl amides, fatty acid esters thereof and fatty acid esters of glycerin. These antistatic agents may be used individually, or two or more thereof may be used in combination. Further, the antistatic agent(s) is/are added in an amount of preferably 0.03 to 2 parts by mass, more preferably 0.04 to 1 part by mass, with respect to a total of 100 parts by mass of the above-described (A) polyester resin and the (B1) terminal-modified polyethylene terephthalate or the (B2) terminal-modified polybutylene terephthalate, excluding the group represented by the Formula (1). When the amount is excessively small, the antistatic effect becomes insufficient, while when the amount is excessively large, the antistatic agent may bleed out to the surface and/or cause deterioration in the physical properties the resulting molded article.

Further, in the polyester resin composition according to the present invention, a mold releasing agent may also be blended. As the mold releasing agent, one which improves the releasing property of the resulting molded article from a mold and allows a molded article to be released even from a mold having a cavity of reverse-tapered surface is preferred. Specific examples of such mold releasing agent include polyethylene-based waxes and low-molecular-weight polypropylenes, and these may be used individually, or two or more thereof may be used in combination. Here, the term "polyethylene-based waxes" refers to low-molecular-weight polyethylenes having a molecular weight of about 500 to 10,000.

Such mold releasing agent is preferably added in an amount of 0.1 to 1 part by mass with respect to a total of 100 parts by mass of the above-described (A) polyester resin and the (B1) terminal-modified polyethylene terephthalate or the (B2) terminal-modified polybutylene terephthalate, excluding the group represented by the Formula (1).

The polyester resin composition according to the present invention can be molded by a known molding method using a known molding apparatus. For example, the polyester resin composition according to the present invention can be molded by an arbitrary molding method, such as extrusion molding, injection molding, blow molding, blow molding, calender molding or compression molding, to be used in, for example, sheets; films; containers such as equipment housings, food containers, cosmetic containers, jars and tanks; bottles such as food bottles, beverage bottles, cooking oil bottles and seasoning bottles; packaging materials such as food packaging materials, wrapping materials and transport packaging materials; sheets and films such as protection films of electronic materials and protection sheets of electrical appliances; miscellaneous daily goods; toys; and fiber materials. In particular, the polyester resin composition containing the (B2) terminal-modified polybutylene terephthalate can also be used in automobile electronic components such as electric parts, electronic parts, electromechanical parts, lights, connectors, ignition coils and current-carrying parts of air-bags; automobile mechanical components such as gears, door-lock housings and exhaust-related products; automobile interior and exterior components such as wiper arms, door mirror stay, headlight housings, sunroof rims, frames, instrument panels, spoiler panels, dashboard panels, rear-window panels, exterior air spoilers, sheet back rest, wind deflectors and shock absorption members (e.g., bumpers); fairings; and pipes.

The molded body according to the present invention may be stretched as well, and examples of a stretching method include a method in which, after premolding, the resulting premolded article is stretched by applying a stress thereto in such a manner to allow the premolded article to be elongated uniaxially or biaxially in the stretching direction or into the form of a cylinder (bottle container). The stretching is usually carried out at a temperature of 80 to 200°C.

The heating method is not particularly restricted and a method by which the entirety of the molded body can be heated uniformly is preferred; however, a method by which a part or plural parts of the molded body is/are heated may also be employed.

Further, particularly in the case of the polyester resin composition containing the (B2) terminal-modified polybutylene terephthalate, the crystallinity of the above-described molded article can be improved by an annealing treatment. By heating the molded article at a temperature of not lower than the glass transition temperature and not higher than the melting point of the polybutylene terephthalate, the crystallinity of the molded article can be improved.

In cases where the polyester resin composition according to the present invention is used as a fiber material, the polyester resin composition may be melted and then stretched. A fiber obtained by stretching and orienting the polyester resin composition is particularly preferred. As a stretching method, a known stretching method may be employed, and the draw ratio can be set in the range where the fiber is not broken.

The resulting fiber may be subjected to twisting, an adhesive treatment, a heat treatment and/or an alkali treatment, and the twisting may be performed with a fiber material other than a polyester fiber. As such other fiber material, one which is easily intertwined with a polyester fiber and less likely to be broken is preferably employed.

The above-described fiber may be utilized in those applications of, for example, vehicle tire structures, printing substrates, wallpaper bases, wiping materials, various filter materials, medical and health materials such as poultices and sanitary products, clothings, interlining clothes, pillowcases, cosmetic base materials, automobile interior materials, acoustic insulators, packaging materials and industrial materials such as civil engineering materials.

In cases where the polyester resin composition according to the present invention is molded by an extrusion molding method, it is preferred that the molding be carried out while supplying an inert gas such as nitrogen gas into the extruder and that the screw temperature be set at no more than 50°C higher than the melting point of the polyethylene terephthalate. When the screw temperature is excessively low, the molding process may become unstable due to the occurrence of short extrusion and an overload may also easily occur, while when the screw temperature is excessively high, the resin may be thermally decomposed, leading to deterioration in the physical properties of the resulting molded article and coloring thereof. Therefore, such an excessively low or high screw temperature is not preferred.

In cases where the polyester resin composition according to the present invention is molded into a plastic bottle, a variety of blow molding method can be used. The blow molding method is not particularly restricted, and examples thereof include direct blow method in which a preform is extrusion-molded and then subjected to blow molding; and injection blow molding method in which a preform (parison) is injection-molded and then subjected to blow molding.

As the latter injection blow molding method, either of a hot parison method (one-stage method) in which a preform is molded and then continuously blow-molded and a cold parison method (two-stage method) in which a preform is once cooled and taken out before being subjected to re-heating and blow molding can be employed.

The above-described preform may be constituted by a single polyester resin layer or by two or more polyester resin layers. In addition, an intermediate layer may be inserted between an inner layer and outer layer each of which are composed of two or more polyester resin layers, and the intermediate layer may be used as a barrier layer or an oxygen-absorbing layer.

The above-described "barrier layer" refers to, for example, a layer which inhibits permeation of oxygen from outside into the plastic bottle and prevents degeneration of the content, and such barrier layer is particularly suitably used in a plastic bottle for carbonated beverages.

The above-described oxygen-absorbing layer absorbs oxygen and prevents permeation of oxygen inside the plastic bottle. As the oxygen-absorbing layer, an oxidizable organic substance or transition metal catalyst, or a resin having excellent gas-barrier properties which is not substantially oxidized, is employed.

In cases where a multi-layer preform comprising an oxygen-absorbing layer as an intermediate layer is produced as the above-described preform, the preform can be produced by using a known injection molding machine or extrusion molding machine in accordance with the production method of the present invention in which a multi-layer preform can be produced by, with a known co-injection molding machine or the like, preparing an inner and outer layers from a polyester resin and inserting therebetween one or plural oxygen-absorbing layers.

For example, in the polyester resin composition comprising the (B1) terminal-modified polyethylene terephthalate, in cases where the above-described preform is stretch-blow molded, the preform is stretched with heating at a temperature of not lower than the glass transition temperature of the polyethylene terephthalate. Specifically, the stretching can be carried out at a temperature of 85°C to 135°C, more preferably 90°C to 130°C. When the temperature is lower than 85°C, the preform may not be sufficiently softened, so that stretch-blow molding thereof cannot be performed, while when the temperature is higher than 135°C or when the heating time is too long, the preform may be excessively crystallized, so that the preform may not be uniformly stretched or the transparency of the resulting plastic bottle may be impaired.

The above-described stretching is carried out by stretch-blow molding of the preform heated at a prescribed temperature. The die temperature is in the range of 85 to 160°C, more preferably 90 to 145°C. When the die temperature is lower than 85°C, thermal contraction of the resulting molded article may be prominent, leading to inconsistency in the molding dimension, while when the die temperature is higher than 160°C, thermal decomposition of the resin may be facilitated and contaminants may become more likely to adhere to the die.

In order to improve the heat resistance of the above-described plastic bottle, the plastic bottle may be subjected to a heat treatment (heat-setting). In the above-described heat treatment, the thus obtained plastic bottle is heated to a temperature of 180 to 245°C, more preferably 200 to 235°C, and then re-molded at a die temperature of 100 to 230°C, more preferably 110 to 200°C. When the die temperature is lower than 100°C, sufficient heat resistance may not be attained, while when the die temperature is 230°C or higher, the shape of the resulting molded article may not be maintained.

Further, although the draw ratio in the blow molding is not particularly restricted, it is preferred that the draw ratio (longitudinal draw ratio × lateral draw ratio) be 3 to 14 times, preferably 4 to 12 times. When the draw ratio is 14 times or greater, whitening of the plastic bottle may occur due to excessive stretching, while when the draw ratio is less than 3 times, it is required to make the preform thin. Still, when the preform is made excessively thin, it becomes difficult to perform mold the preform in uniform thickness.

Further, deformation of the mouth part of the plastic bottle caused by high-temperature filling can be prevented by crystallizing the bottle-neck section of the plastic bottle. In cases where the crystallization of the mouth part is not sufficient, there may arise problems of, for example, deformation by tightening of the cap, leakage of the content and loosening of the cap after cooling the plastic bottle filled with the content. As the method of crystallizing the mouth part, before or after performing blow molding, the mouth part of the preform or plastic bottle can be crystallized by heating. The temperature of the heat crystallization is preferably 160 to 200°C, more preferably 160 to 180°C.

Further, in cases where the polyester resin composition according to the present invention is molded into a plastic bottle for a heat resistance-required application, it is required that the density of the plastic bottle be set to an appropriate level. When the density is too high, the crystallinity of the plastic bottle may become excessively high to cause problems in the blow molding process, while when the density is too low, the plastic bottle may be thermally deformed and leakage of the content may occur when the plastic bottle is heated. The density of the plastic bottle is appropriately selected in accordance with the type of the polyester resin.

Specific use examples of the plastic bottle include, in addition to ordinary bottles, bottles for carbonated beverages, bottles for high-temperature filling, hot-compatible bottles and heat and pressure-resistant bottles. Examples of the application of the plastic bottle include beverage containers of dairy products, teas, soft drinks, carbonated drinks, beers, wines, distilled spirits, Japanese rice wines and the like; storage containers of flavoring agents such as soy sauce, edible oils, salad dressings and spices; containers of detergents such as shampoos and rinses; and containers of cosmetics. The plastic bottle can be applied not only to a small bottle of a few ml or so in volume, but also to a large bottle having a volume of exceeding 5 L. The thickness of the plastic bottle is not restricted as long as it can protect its content, and usually, it is preferred that the thinnest part have a thickness of 0.1 mm to 1 mm.

Further, the plastic bottle can also be used as a coated bottle container in which the outer surface of the plastic bottle is coated with a film of polyethylene, polypropylene or the like or a laminated film obtained by laminating ceramic, silica and the like, as well as a bottle container in which a metal oxide, amorphous carbon or the like is vapor-deposited onto the bottle inner surface.

In cases where an aseptic filling system is adopted to the above-described plastic bottle, any known system can be employed. Specific examples thereof include a system constituted by a combination of a container-sterilizing section and an aseptic filling section.

In the container-sterilizing section, after washing inside of the plastic bottle with, for example, warm water or a chlorine-based agent containing hydrogen peroxide, peracetic acid, hypochlorous acid, ozone or the like, the plastic bottle is sterilized by, for example, injecting a sterile solvent thereto or impregnating the plastic bottle into a chemical agent. Then, the resulting plastic bottle is inverted to discharge the sterile solvent or chemical agent and subjected to a treatment for removing residual matters by blowing air or the like.

In the aseptic filling section, the thus sterilized container is filled with a sterilized content and then subjected to a capping process. Examples of the method of sterilizing the content include a method of filtering out bacteria by ultrafiltration and a method of performing flash pasteurization by high-temperature short-time sterilization.

The upper limit of the temperature at which the content is filled is 40°C, more preferably 30 to 40°C. However, in cases where a cooling process is performed after the filling step, the upper limit of temperature may be 50 to 60°C.

In cases where the polyester resin composition according to the present invention is molded into the form of a sheet, the molding method is not particularly restricted, and any known molding method such as extrusion molding, injection molding, hollow molding, blow molding, film molding or sheet molding can be employed. In cases where the polyester resin composition is extrusion molded, as a temperature condition of the extrusion molding machine, it is preferred that the screw temperature be set at no more than 50°C higher than the melting point of the above-described polyester resin. When the screw temperature is excessively low, the molding process may become unstable due to the occurrence of short extrusion and an overload may also easily occur, while when the screw temperature is excessively high, the resin may be thermally decomposed, leading to deterioration in the physical properties of the resulting molded article and coloring thereof. Therefore, such an excessively low or high screw temperature is not preferred.

### EXAMPLES

### [Production Example 1]

After mixing 100 parts by mass of a polyethylene terephthalate resin (TR-8550; manufactured by Teijin Chemicals Ltd.), which had been dried under reduced pressure for 3 hours at 140°C, and 0.3 parts by mass of the test compound shown in Table 1 below, the resulting mixture was melt-kneaded using a uniaxial extruder (LABOPLAST MILL µ; manufactured by Toyo Seiki Seisaku-sho, Ltd.) at a cylinder temperature of 270°C and a screw speed of 150 rpm to obtain a pellet A. The thus obtained pellet A was then dried at 140°C for 3 hours to be used in the following Reference Examples and Comparative Examples.

### [Production Example 2]

A pellet B was obtained in the same manner as in the above-described Production Example 1, except that the amount of the test compound was changed from 0.3 parts by mass to 3 parts by mass.

### [Reference Example 1-1 and Comparative Examples 1-1 to 1-4]

To a polyethylene terephthalate (TR-8550, manufactured by Teijin Chemicals Ltd.), the pellet A obtained in Production Example 1 or the pellet B obtained in Production Example 2 was blended. The pellet A or B was blended in an amount of 6.67 parts by mass with respect to a total of 100 parts by mass of the polyethylene terephthalate and the pellet A or B. The polyethylene terephthalate to which the pellet was blended was then mixed and granulated using a biaxial extruder (apparatus: TEX28V, manufactured by The Japan Steel Works, Ltd.; cylinder temperature: 270°C, screw speed: 200 rpm) to obtain a pellet. It is noted here that, in the below-described Comparative Examples 1-1 and 1-2, a pellet was obtained by granulating the polyethylene terephthalate without an addition of the pellet A or B.

The thus obtained pellet was molded into a sheet of 90 mm × 90 mm × 1 mm using an injection molding machine (EC100, manufactured by Toshiba Corporation) (molding conditions: injection temperature of 280°C, injection time of 15 seconds, die temperature of 15°C and die cooling time of 20 seconds).

A biaxial stretching machine (EX-10B, manufactured by Toyo Seiki Seisaku-sho, Ltd.) was confirmed to be in a stable condition at a preset temperature of 97°C and a stretching rate of 2.5 mm/min in both the longitudinal and transverse directions. After setting the thus obtained sheet on the stretching machine and leaving it to stand for 2.5 minutes, the sheet was stretched by 4 times. The thus stretched sheet was then subjected to the following measurements. The results thereof are shown in Table 1 below, wherein Examples 1-1 and 1-2 are Reference Examples.

It is noted here that, in the below-described annealing treatment performed in Reference Example 1-2 and Comparative Example 1-2, a plate heater heated to 180°C was arranged at a distance of 10 mm and 20 mm from the upper and bottom surfaces of the stretched sheet, respectively, and the stretched sheet was left to stand for 1 minute.

### (1) Yellowness (Y.I.)

In accordance with JIS K7105, the yellowness (Y.I.) of each test piece was measured using a spectrocolorimeter (SC-P; manufactured by Suga Test Instruments Co., Ltd.).

### (2) Transparency

In accordance with JIS K7361, JIS K7136, ISO 13468 and ISO 14782, the haze [%] and the clarity [%] were measured using a haze meter (HAZE GUARD II; manufactured by Toyo Seiki Seisaku-sho Ltd.).

### (3) Tensile Test

In accordance with JIS K7127-1999 and ISO 527-3, a tensile test was performed using a tensile tester (STROGRAPH APII; manufactured by Toyo Seiki Seisaku-sho Ltd.) to measure the tensile strength at yield point [MPa] and tensile elastic modulus [GPa].

**[Table 1]**

| | | Example 1-1 | Example 1-2 | Comparative Example 1-1 | Comparative Example 1-2 | Comparative Example 1-3 | Comparative Example 1-4 |
|---|---|---|---|---|---|---|---|
| Pellet | | A | A | none | none | A | B |
| Content ¹⁾ | | 0.02 | 0.02 | 0 | 0 | 0.02 | 0.2 |
| Test compound | | a | a | - | - | b | c |
| Presence or absence of annealing treatment ²⁾ | | no | yes | no | yes | no | no |
| Evaluation Results | Haze [%] | 0.3 | 0.2 | 0.2 | 0.3 | 0.3 | 0.3 |
| | Clarity [%] | 100 | 99.9 | 100 | 100 | 100 | 100 |
| | Y.I. | 1.2 | 1.6 | 1.4 | 1.3 | 1.3 | 4.5 |
| | Tensile strength at yield point [MPa] | 126 | 123 | 116 | 135 | 120 | 118 |
| | Tensile elastic modulus [GPa] | 4.6 | 4.3 | 4.3 | 4.3 | 4.4 | 4.4 |

| | | | | | | | |
|---|---|---|---|---|---|---|---|
| ¹⁾ Content of the following group with respect to a total of 100 parts by mass of the polyethylene terephthalate resin and the terminal-modified polyethylene terephthalate excluding the group. 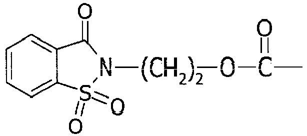 ²⁾ Annealing treatment: at 180°C for 1 minute Test compound a: sodium 1,2-benzisothiazol-3(2H)-one-1,1-dioxide Test compound b: sodium montanate (LICOMONT NaV 101; manufactured by Clariant) Test compound c: sodium carboxylate | | | | | | | |

From the results of the above-described Reference Examples 1-1 and 1-2, it was confirmed that the transparency of the respective test pieces was reduced and that, therefore, the use of these molded articles in transparency-required applications is limited.

From the results of Reference Example 1-1, it was confirmed that the molded body according to the present invention has good transparency with limited coloration and exhibits largely improved physical properties as compared to the molded body of Comparative Example 1-1 in which no crystal nucleating agent was blended.

### [Reference Example] Test for Verifying Terminal Modification (Polymer Bound) of Polyethylene Terephthalate

In advance, 100 parts by mass of polyethylene terephthalate and 1 part by mass of sodium 1,2-benzisothiazol-3(2H)-one-1,1-dioxide were mixed, and the resulting mixture was granulated using a biaxial extruder (apparatus: TEX28V, manufactured by The Japan Steel Works, Ltd.; cylinder temperature: 270°C, screw speed: 200 rpm) to obtain a pellet. Then, 10 g of the thus obtained pellet was frozen on dry ice and pulverized. The resultant was refluxed with 100 ml of 95% aqueous ethanol solution for 24 hours to extract the additive components contained in the pellet into the aqueous ethanol solution. The thus obtained extract was quantified by ion chromatography (DX320, manufactured by DIONEX Corporation); however, sodium 1,2-benzisothiazol-3(2H)-one-1,1-dioxide was not detected at all. The analysis was performed under the following conditions.
Column: IONPAC AS19
Eluent: potassium hydroxide
Suppressor: ASRS 4mm
Current: 150 mA
Temperature: 35°C

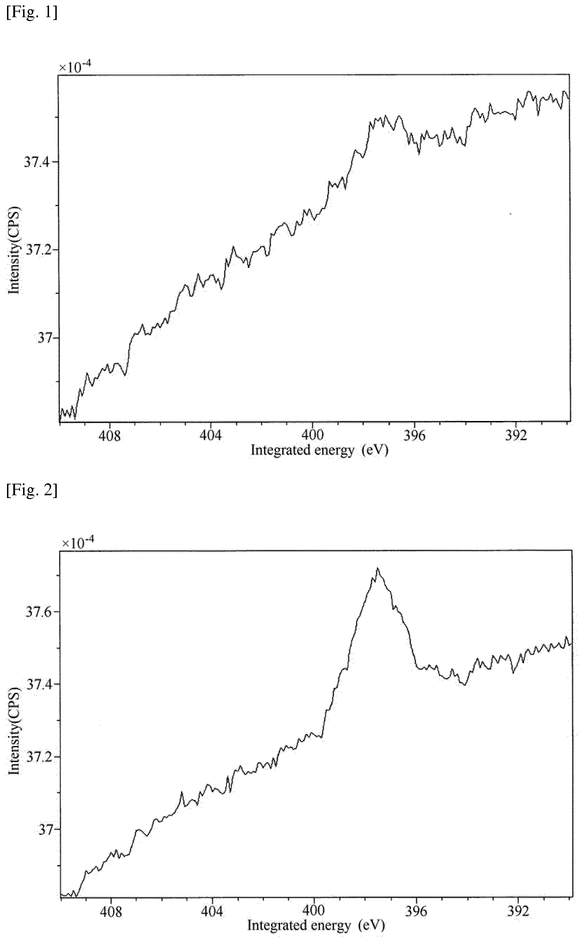

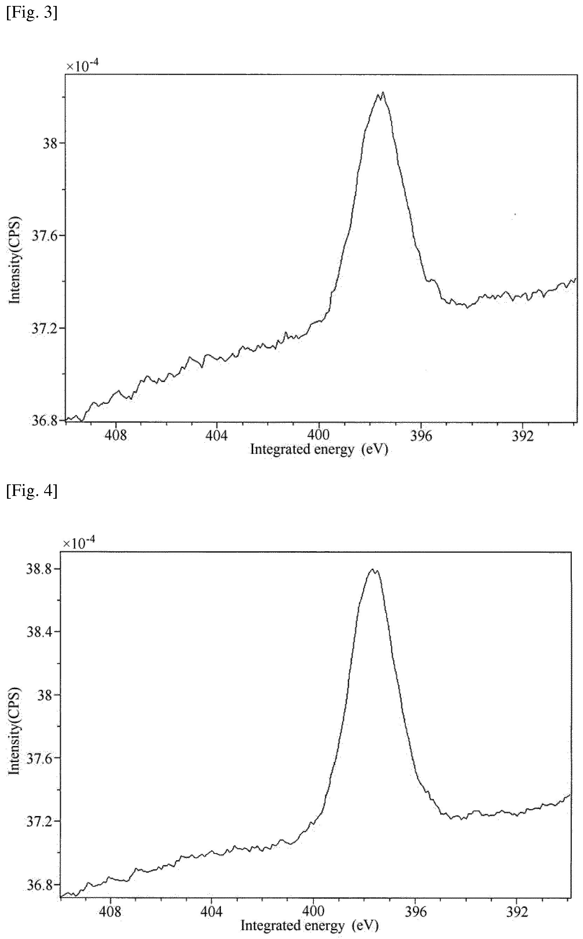

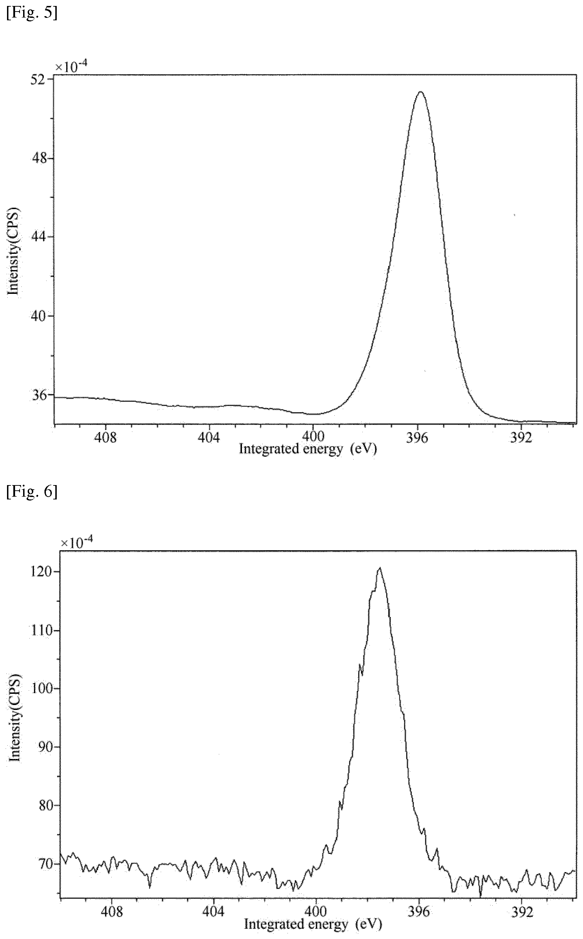

Using an X-ray photoelectron spectrometer (AXIS-ULTRA, manufactured by Shimadzu-Kratos, measurement conditions: X-ray source = Mg, 15 kV, 15 mA), the energy state of the Is orbital of nitrogen contained in the below-described pellets or compounds was verified by X-ray photoelectron spectrum. Fig. 1 shows an X-ray photoelectron spectrum of a polyethylene terephthalate (PET) in which no nucleating agent is added; Fig. 2 shows an X-ray photoelectron spectrum of a PET containing 1% sodium 1,2-benzisothiazol-3(2H)-one-1,1-dioxide; Fig. 3 shows an X-ray photoelectron spectrum of a PET containing 3% sodium 1,2-benzisothiazol-3(2H)-one-1,1-dioxide; Fig. 4 shows an X-ray photoelectron spectrum of a PET containing 5% sodium 1,2-benzisothiazol-3(2H)-one-1,1-dioxide; Fig. 5 shows an X-ray photoelectron spectrum of sodium 1,2-benzisothiazol-3(2H)-one-1,1-dioxide; and Fig. 6 shows an X-ray photoelectron spectrum of N-ethylalcohol-1,2-benzisothiazol-3(2H)-one-1,1-dioxide.

From Fig. 1, it is seen that the polyethylene terephthalate (PET) containing no nitrogen did not yield any peak. In Fig. 5 which shows an X-ray photoelectron spectrum of sodium 1,2-benzisothiazol-3(2H)-one-1,1-dioxide, it was confirmed that the position of the peak was shifted as compared to those peaks of Figs. 2 to 4 showing the respective X-ray photoelectron spectra of the polyethylene terephthalates containing sodium 1,2-benzisothiazol-3(2H)-one-1,1-dioxide.

When the X-ray photoelectron spectrum of N-ethylalcohol-1,2-benzisothiazol-3(2H)-one-1,1-dioxide shown in Fig. 6 was compared to other X-ray photoelectron spectra, it was found that the position of the peak in Fig. 6 was the same as that of those peaks shown in Figs. 2 to 4. Accordingly, the X-ray photoelectron spectra of Figs. 2 to 4 indicated that sodium 1,2-benzisothiazol-3(2H)-one-1,1-dioxide was bound to the respective polyester resins.

### [Reference Examples 2-1 to 3-1 and Comparative Examples 2-1 to 3-3]

To 100 parts by mass of a polybutylene terephthalate (trade name: DURANEX 2002, manufactured by WinTech Polymer Ltd.), the additives shown in Table 2 below were added and mixed. The resulting mixture was dried for 4 hours at 150°C and then melt-kneaded using a biaxial extruder (TEX28V, manufactured by The Japan Steel Works, Ltd.) at a cylinder temperature of 260°C and a screw speed of 200 rpm to obtain a pellet. After drying the thus obtained pellet in a Geer oven at 50°C for half a day, using an injection molding machine (EC100, manufactured by Toshiba Corporation), the pellet was molded into an A-type test piece (thickness: 4 mm) in accordance with JIS K7139-2007 and ISO 3167-2002 (molding conditions: injection temperature = 250°C, die temperature = 50°C).

The thus obtained A-type test piece was subjected to the following evaluations.

### (Gloss)

In accordance with JIS K7105-1981, the gloss value (60°) of the clamped parts on both ends of the A-type test piece was measured.

### (Impact Test)

In accordance with JIS K7111-1-2006 and ISO 179-1-2000, the clamped parts on both ends of the A-type test piece were cut off to prepare a test piece of 80 mm in length, 10 mm in width and 4 mm in thickness and, using a Charpy impact tester (DG-CB, manufactured by Toyo Seiki Seisaku-sho, Ltd.), the thus obtained test piece was subjected to a Charpy edgewise impact test to measure the impact strength. The results thereof are shown in Tables 2 and 3 below, wherein Examples 2-1 and 3-1 are Reference Examples.

### (Differential Scanning Calorimetry; DSC)

In accordance with JIS K7121-1987, using a differential scanning calorimeter (DIAMOND, manufactured by PerkinElmer Co., Ltd.), the thus obtained pellet was heated under nitrogen atmosphere from 5°C to 260°C at a rate of 10°C/min. After maintaining the pellet at this temperature for 10 minutes, the pellet was cooled to 100°C at a rate of -10°C/min to obtain a DSC curve. From this DSC curve, the crystallization peak temperature (crystallization temperature) and the peak area (ΔHc; crystallization enthalpy) were determined. The results thereof are shown in Tables 2 and 3 below.

It is noted here that ΔHc is a factor which greatly affects the moldability of a molded article. The larger the ΔHc, the better the moldability can be attained.

### (Load Deflection Temperature; HDT)

In accordance with JIS K7191-2-2007 and ISO 75-2-2004, the clamped parts on both ends of the A-type test piece were cut off to prepare a test piece of 80 mm in length, 10 mm in width and 4 mm in thickness and, using a HDT tester (HEAT DEFORMATION TESTER 3M-2, manufactured by Toyo Seiki Seisaku-sho, Ltd.), the load deflection temperature of the thus obtained test piece was measured flatwise at a load of 1.80 MPa. The results thereof are shown in Tables 2 and 3 below.

### (Bending Test)

In accordance with JIS K7171-1994 and ISO 178-1993, the clamped parts on both ends of the A-type test piece were cut off to prepare a test piece of 80 mm in length, 10 mm in width and 4 mm in thickness and, using a bending tester (manufactured by Shimadzu Corporation), the bending strength of the thus obtained test piece was measured. The results thereof are shown in Tables 2 and 3 below.

**[Table 2]**

| | | Example 2-1 | Comparative Example 2-1 | Comparative Example 2-2 | Comparative Example 2-3 |
|---|---|---|---|---|---|
| Formulation | PBT*¹ | 100 | 100 | 100 | 100 |
| | Compound No.1*² | 0.3 | - | - | - |
| | N-1*³ | - | - | 0.3 | - |
| | N-2*⁴ | - | - | - | 0.3 |
| Evaluation Results | Gloss 60° | 103 | 102 | 103 | 101 |
| | Impact strength [MPa] | 64.2 | 59.9 | 60.1 | 60.2 |
| | Crystallization temperature [°C] | 203.8 | 202.4 | 204.0 | 202.9 |
| | ΔHc [J/g] | 38.3 | 35.3 | 36.6 | 35.4 |
| | HDT [°C] | 57.8 | 53.3 | 53.8 | 53.9 |
| | Bending strength [MPa] | 89.8 | 86.2 | 85.2 | 85.4 |

| | | | | | |
|---|---|---|---|---|---|
| *¹: polybutylene terephthalate (DURANEX 2002, manufactured by WinTech Polymer Ltd.) *²: sodium 1,2-benzisothiazol-3(2H)-one-1,1-dioxide *³: LICOMONT NaV 101, manufactured by Clariant (main component: calcium montanate) *⁴: sodium methylenebis(2,4-di-t-butylphenyl)phosphate | | | | | |

**[Table 3]**

| | | Example 3-1 | Comparative Example 3-1 | Comparative Example 3-2 | Comparative Example 3-3 |
|---|---|---|---|---|---|
| Formulation | PBT*¹ | 100 | 100 | 100 | 100 |
| | Compound No.1*² | 0.3 | - | - | - |
| | N-1*³ | | - | 0.3 | - |
| | N-2*⁴ | - | - | - | 0.3 |
| | Plasticizer *⁵ | 3 | 3 | 3 | 3 |
| Evaluation Results | Gloss 60° | 104 | 100 | 103 | 98 |
| | Impact strength [MPa] | 59.4 | 56.2 | 56.5 | 55.8 |
| | Crystallization temperature [°C] | 203.3 | 201.8 | 203.6 | 202.0 |
| | ΔHc [J/g] | 39.4 | 37.2 | 37.7 | 37.5 |
| | HDT [°C] | 57.7 | 53.8 | 54.5 | 55.7 |
| | Bending strength [MPa] | 65.9 | 65.9 | 64.5 | 56.4 |

| | | | | | |
|---|---|---|---|---|---|
| *⁵: polyether ester-based plasticizer (ADK CIZER RS-735, manufactured by ADEKA Corporation | | | | | |

From the results of Comparative Examples 2-2 and 2-3 shown in Table 2, it was confirmed that, as compared to the polyester resin composition of Comparative Example 2-1 which contained no crystal nucleating agent, the polyester resin compositions containing a conventional crystal nucleating agent showed slightly better physical property-improving effects, but exhibited poor ΔHc-improving effect. Meanwhile, from the results of Reference Example 2-1, the polyester resin composition according to the present invention was confirmed to show an improved ΔHc and have superior moldability. Furthermore, it was also confirmed that the polyester resin composition according to the Reference Examples have an improved load deflection temperature (HDT) and that, therefore, the serviceable temperature range of a molded article produced therefrom can be expanded.

Moreover, from the results of Reference Example 3-1, it was confirmed that, by using a plasticizer in combination, ΔHc can be further improved and good moldability can consequently be attained.

## Claims

1. A polyester resin composition, which comprises (A) a polyester resin and (B1) a terminal-modified polyethylene terephthalate or (B2) a terminal-modified polybutylene terephthalate,
wherein said (B1) terminal-modified polyethylene terephthalate or (B2) a terminal-modified polybutylene terephthalate is a polyethylene terephthalate or polybutylene terphthalate whose terminal(s) is/are modified with a group represented by the following Formula (1) and a metal carboxylate, wherein said metal carboxylate is selected from lithium carboxylate, potassium carboxylate and sodium carboxylate: 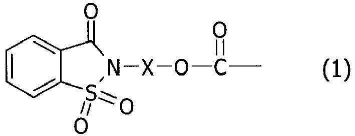 (wherein, X represents a direct bond or an alkylene group having 1 to 12 carbon atoms) .

2. The polyester resin composition according to claim 1, wherein the alkylene group includes methylene, ethylene, 1,3-propylene, 1,4-butylene, 1,5-pentylene, 1,6-hexylene, 1,2-butylene, 1,2-pentylene, 1,2-hexylene, 1,9-nonylene, 1,10-decylene, 1,11-undecylene and 1,12-dodecylene.

3. The polyester resin composition according to claim 1 or 2, wherein the alkylene group is an ethylene group for polyethylene terephthalate and a 1,4-butylene group for polybutylene terephthalate.

4. The polyester resin composition according to claim 1, wherein the content of said group represented by said Formula (1) is 0.001 to 1 part by mass with respect to a total of 100 parts by mass of said (A) polyester resin and said (B1) terminal-modified polyethylene terephthalate, excluding said group represented by said Formula (1).

5. The polyester resin composition according to claim 1, wherein the content of said group represented by said Formula (1) is 0.001 to 5 parts by mass with respect to a total of 100 parts by mass of said (A) polyester resin and said (B2) terminal-modified polybutylene terephthalate, excluding said group represented by said Formula (1).

6. The polyester resin composition according to according to claim 1, wherein said (A) polyester resin is at least one polyester resin selected from the group consisting of polyethylene terephthalate, polybutylene terephthalate, polytrimethylene terephthalate, polyethylene naphthalate and polybutylene naphthalate.

7. The polyester composition according to any preceding claim, wherein the composition further comprises an additive selected from plasticizers, fillers, phenolic antioxidants, phosphorus-based antioxidants, thioether-based antioxidants, ultraviolet absorbers, hindered amine compounds, heavy metal inactivators, crystal nucleating agents, flame retardants, metallic soaps, hydrotalcites, lubricants, antistatic agents, pigments and dyes.

8. The polyester resin composition according to claim 7, wherein the additive is a plasticizer, an inorganic filler or a lubricant.

9. The polyester resin composition according to claim 1, wherein said metal carboxylate is sodium carboxylate.

10. A molded body, which is **characterized by** being obtained by molding the polyester resin composition according to any one of claims 1 to 9.

11. A sheet, which is obtained by molding the polyester resin composition which comprises (A) a polyester resin and (B1) a terminal-modified polyethylene terephthalate according to claims 1 or 4, said sheet not being subjected to an annealing treatment.

12. A method of producing a sheet, wherein the method comprises molding the polyester resin composition which comprises (A) a polyester resin and (B1) a terminal-modified polyethylene terephthalate according to claims 1 or 4, wherein the molded sheet is not subjected to an annealing treatment.

## Patentansprüche

1. Polyesterharzzusammensetzung, die umfasst (A) ein Polyesterharz und (B1) ein terminal-modifiziertes Polyethylenterephthalat oder (B2) ein terminal-modifiziertes Polybutylenterephthalat,
wobei das (B1) terminal-modifizierte Polyethylenterephthalat oder (B2) ein terminal-modifiziertes Polybutylenterephthalat ein Polyethylenterephthalat oder Polybutylenterephthalat ist, dessen Terminal(e) mit einer Gruppe modifiziert ist/sind, die durch die folgende Formel (1) und ein Carboxylat repräsentiert ist, wobei das Metallcarboxylat aus Lithiumcarboxylat, Kaliumcarboxylat und Natriumcarboxylat selektiert ist: 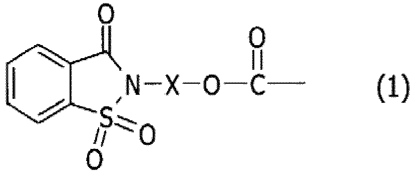 (wobei, X eine direkte Verbindung oder eine Alkylengruppe repräsentiert, die 1 bis 12 Kohlenstoffatome aufweist).

2. Polyesterharzzusammensetzung nach Anspruch 1, wobei die Alkylengruppe Methylen, Ethylen, 1,3-Propylen, 1,4-Butylen, 1,5-Pentylen, 1,6-Hexylen, 1,2-Butylen, 1,2-Pentylen, 1,2-Hexylen, 1,9-Nonylen, 1,10-Decylen, 1,11-Undecylen und 1,12-Dodecylen einschließt.

3. Polyesterharzzusammensetzung nach Anspruch 1 oder 2, wobei die Alkylengruppe eine Ethylengruppe für Polyethylenterephthalat und eine 1,4-Butylengruppe für Polybutylenterephthalat ist.

4. Polyesterharzzusammensetzung nach Anspruch 1, wobei der Inhalt der durch die Formel (1) repräsentierten Gruppe 0,001 bis 1 Teil gewichtsmäßig mit Bezug auf eine Gesamtmenge von 100 Teilen gewichtsmäßig des (A) Polyesterharzes und des (B1) terminal-modifizierten Polyethylenterephthalates ist, ausschließlich der von der Formel (1) repräsentierten Gruppe.

5. Polyesterharzzusammensetzung nach Anspruch 1, wobei der Inhalt der durch die Formel (1) repräsentierten Gruppe 0,001 bis 5 Teile gewichtsmäßig mit Bezug auf eine Gesamtmenge von 100 Teilen gewichtsmäßig des (A) Polyesterharzes und des (B2) terminal-modifizierten Polybutylenterephthalates ist, ausschließlich der von der Formel (1) repräsentierten Gruppe.

6. Polyesterharzzusammensetzung nach nach Anspruch 1, wobei das (A) Polyesterharz zumindest ein Polyesterharz ist, das aus der Gruppe selektiert wurde, die aus Polyethylenterephthalat, Polybutylenterephthalat, Polytrimethylenterephthalat, Polyethylennaphthalat und Polybutylennaphthalat besteht.

7. Polyesterzusammensetzung nach einem vorhergehenden Anspruch, wobei die Zusammensetzung ferner ein Zusatzmittel umfasst, das aus Plastifiziermitteln, Füllmitteln, Phenol-Antioxidantien, Antioxidantien auf Phosphorbasis, Antioxidantien auf Thioetherbasis, Ultraviolett-Absorbern, behinderten Aminzusammensetzungen, Schwermetall-Inaktivatoren, Kristall-Keimbildnern, Flammenverzögerungsmitteln, Metallseifen, Hydrotalciten, Schmiermitteln, Antistatikmitteln, Pigmenten und Farbstoffen selektiert wurde.

8. Polyesterharzzusammensetzung nach Anspruch 7, wobei das Zusatzmittel ein Plastifizierer, ein anorganisches Füllmittel oder ein Schmiermittel ist.

9. Polyesterharzzusammensetzung nach Anspruch 1, wobei das Metallcarboxylat Natriumcarboxylat ist.

10. Formkörper, der **dadurch gekennzeichnet ist, dass** er durch Formen der Polyesterharzzusammensetzung nach einem der Ansprüche 1 bis 9 erhalten wurde.

11. Platte, die durch Formen der Polyesterharzzusammensetzung erhalten wurde, die (A) ein Polyesterharz und (B1) ein terminal-modifiziertes Polyethylenterephthalat nach Ansprüchen 1 oder 4 umfasst, wobei die Platte keiner Wärmebehandlung unterzogen wird.

12. Verfahren zum Herstellen einer Platte, wobei das Verfahren das Formen der Polyesterharzzusammensetzung umfasst, die(A) ein Polyesterharz und (B1) ein terminal-modifiziertes Polyethylenterephthalat nach einem der Ansprüche 1 oder 4 umfasst, wobei die geformte Platte keiner Wärmebehandlung unterzogen wird.

## Revendications

1. Composition de résine polyester, qui comprend (A) une résine polyester et (B1) un téréphtalate de polyéthylène à terminaisons modifiées ou (B2) un téréphtalate de polybutylène à terminaisons modifiées,
dans laquelle ledit (B1) téréphtalate de polyéthylène à terminaisons modifiées ou (B2) un téréphtalate de polybutylène à terminaisons modifiées est un téréphtalate de polyéthylène ou un téréphtalate de polyéthylène dont le(s) terminal(aux) est/sont modifié(s) avec un groupe représenté par la formule (1) suivante et un carboxylate de métal, ledit carboxylate de métal étant sélectionné parmi le carboxylate de lithium, le carboxylate de potassium et le carboxylate de sodium : 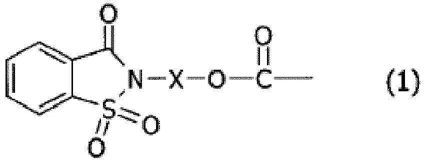 (dans laquelle X représente une liaison directe ou un groupe alkylène portant 1 à 12 atomes de carbone).

2. Composition de résine polyester selon la revendication 1, dans laquelle le groupe alkylène renferme du méthylène, de l'éthylène, du 1,3-propylène, du 1,4-butylène, du 1,5-pentylène, du 1,6-hexylène, du 1,2-butylène, du 1,2-pentylène, du 1,2-hexylène, du 1,9-nonylène, du 1,10-décylène, du 1,11-undécylène et du 1,12-dodécylène.

3. Composition de résine polyester selon la revendication 1 ou la revendication 2, dans laquelle le groupe alkylène est un groupe éthylène pour le téréphtalate de polyéthylène et un groupe 1,4-butylène pour le téréphtalate de polybutylène.

4. Composition de résine polyester selon la revendication 1, dans laquelle la teneur dudit groupe représenté par ladite formule (1) est de 0,001 à 1 partie en masse par rapport à un total de 100 parties en masse de ladite (A) résine polyester et dudit (B1) téréphtalate de polyéthylène à terminaisons modifiées, en excluant ledit groupe représenté par ladite formule (1).

5. Composition de résine polyester selon la revendication 1, dans laquelle la teneur dudit groupe représenté par ladite formule (1) est de 0,001 à 5 partie en masse par rapport à un total de 100 parties en masse de ladite (A) résine polyester et dudit (B2) téréphtalate de polyéthylène à terminaisons modifiées, en excluant ledit groupe représenté par ladite formule (1).

6. Composition de résine polyester selon la revendication 1, dans laquelle ladite (A) résine polyester est au moins une résine polyester sélectionnée dans le groupe constitué de téréphtalate de polyéthylène, de téréphtalate de polybutylène, de téréphtalate de polytriméthylène, de naphtalate de polyéthylène et de naphtalate de polybutylène.

7. Composition de résine polyester selon une quelconque revendication précédente, la composition comprenant par ailleurs un additif sélectionné parmi des plastifiants, des charges, des antioxydants phénoliques, des antioxydants à base de phosphore, des antioxydants à base de thioéther, des absorbeurs d'ultraviolets, des composés d'aminé encombrée, des inactivateurs de métaux lourds, des agents de nucléation de cristaux, des agents ignifuges, des savons métalliques, des hydrotalcites, des lubrifiants, des agents antistatiques, des pigments et des teintures.

8. Compositions de résine polyester selon la revendication 7, dans laquelle l'additif est un plastifiant, une charge inorganique ou un lubrifiant.

9. Composition de résine polyester selon la revendication 1, dans laquelle ledit carboxylate de métal est le carboxylate de sodium.

10. Corps moulé, qui est **caractérisé en ce qu'**il est obtenu par moulage de la composition de résine polyester selon l'une quelconque des revendications 1 à 9.

11. Feuille qui est obtenue par moulage de la composition de résine polyester qui comprend (A) une résine polyester (B1) un téréphtalate de polyéthylène à terminaux modifiés selon la revendication 1 ou 4, ladite feuille n'étant pas soumise à un traitement de recuit.

12. Procédé de production d'une feuille, le procédé comprenant le moulage d'une composition de résine polyester qui comprend (A) une résine polyester et (B1) un téréphtalate de polyéthylène à terminaux modifiés selon la revendication 1 ou 4, dans lequel la feuille moulée n'est pas soumise à un traitement de recuit.
